# EUROPEAN PATENT SPECIFICATION

(11) **EP 3 465 563 B1**
(45) Date of publication and mention of the grant of the patent: **22.11.2023**
(21) Application number: 17730019.1
(22) Date of filing: 02.06.2017
(51) Int. Cl.: G06Q 10/04, G06Q 50/06

(54) **SYSTEM AND METHOD FOR WELL LIFECYCLE PLANNING VISUALIZATION**
SYSTEM UND VERFAHREN ZUR VISUALISIERUNG DER PLANUNG DES LEBENSZYKLUS EINES BOHRLOCHS
SYSTÈME ET PROCÉDÉ DE VISUALISATION DE PLANIFICATION DE CYCLE DE VIE DE PUITS

(30) Priority: 02.06.2016 US 201662344562 P
(43) Date of publication of application: 10.04.2019
(73) Proprietor: Baker Hughes ESP, Inc., Oklahoma City, OK 73135 (US)
(72) Inventor: RASHEED, Adam, Niskayuna, NY 12309 (US); VAN DAM, Jeremy Daniel, Niskayuna, NY 12309 (US)
(74) Representative: Novagraaf Group
(86) International application number: PCT/US2017/035857
(87) International publication number: WO 2017/210660

(56) References cited:
- US-A1- 2010 042 458
- US-A1- 2012 215 364

## Description

### TECHNICAL FIELD

This disclosure relates generally to production of hydrocarbons and, in more particular, systems and methods for optimizing and visualizing hydrocarbon production from a well over time.

### BACKGROUND

US 2010/0042458 A1 discloses determining an optimum allocation of an applied resource to provide or enhance lift. US 2012/215364 A1 discloses optimizing field lift using single-variable slope control.

Determining the most suitable type of artificial lift to employ in a hydrocarbon producing well is a complex decision that involves a number of different factors including, for example, technical feasibility, lift parameters, operating costs, maintenance practices, reliability, target productions, engineering design, company preferences and other factors. Choosing a lift type is often made based on what has been done in the past and an individual's experience and judgement. In brief, these sorts of decisions are typically made with only a limited analysis of the consequences of a particular lift type.

Further, such a decision will typically be made based on the current status of the well (including its current production rate) and its expected future production as a function time as estimated by a production decline curve or "decline curve", hereinafter. Of course, fluid production from a hydrocarbon well is a dynamic quantity and the lift technology that is appropriate today might not be appropriate in the future.

Additionally, this decision will be made based on only a subset of the available lift types / parameter combinations. There are many different lift types and it is unlikely that all possibilities are considered for use in a particular well. Even after the lift type is selected additional decisions will need to be made regarding the particular equipment configuration. As one specific example, if it appears that an electrical submersible pump would be a good choice for a well, a decision will need to be made regarding the particular pump, motor, and cable to use. A key challenge is displaying the wide variety of options to the user in a way that facilitates decision making.

Even in circumstances where a well lifecycle plan is determined algorithmically, a single solution to a complex problem is often not very useful since real world considerations sometimes prevent an operator from following the plan exactly. In such a case, it would be helpful to be able to vary certain aspects of the optimum solution and see immediate feedback with respect to how much that would impact the objective function that was used to calculate the plan (e.g., minimum cost, maximum profit, maximum production, etc.).

As a result, even an optimum process incorporates a limited view of what might be the most suitable overall solution. Further, it might not contemplate if or when a future change in the well's decline curve would call for replacing the current lift type with one that more suitable to the then-current production level.

Thus, what is needed is a system and method of determining a good or optimal lift plan that includes a recommendation of an initial choice of artificial lift type and that further includes consideration of when initial lift type of lift needs to be changed in order to maximize the economic value of the well.

Further, what is needed is some way to visualize a recommendation based on a lifecycle calculation in a way that allows a user to adjust a proposed solution to provide information about alternatives if the recommend solution is not followed exactly.

Thus, what is needed is a method and apparatus that can be used to assist in lifecycle planning for a hydrocarbon well over its entire life or some extended time window.

### SUMMARY OF THE INVENTION .

The present invention is defined in the accompanying claims

The foregoing has outlined in broad terms some of the more important features of the invention disclosed herein so that the detailed description that follows may be more clearly understood, and so that the contribution of the instant inventors to the art may be better appreciated.

### BRIEF DESCRIPTION OF THE DRAWINGS

These and further aspects of the invention are described in detail in the following examples and accompanying drawings.
Figure 1 is a schematic diagram that illustrates a prior art decline curve for a well.
Figure 2 contains an exemplary schematic diagram that illustrates a lift lifecycle plan for a well.
Figure 3 contains an operating logic suitable for use with an embodiment of a well lifecycle computation.
Figure 4 contains an example level 1 screen display from an embodiment.
Figure 5 illustrates a situation where a lift configuration might be excluded from consideration at a point in time where the decline curve does not fall within the boundaries of its performance envelope.
Figure 6 contains a schematic illustration of an operating environment of an embodiment.
Figure 7 contains a screen display of a well lifecycle lift plan details according to an embodiment.
Figure 8 contains a schematic illustration of additional details of the well lifecycle lift plan of Figure 7.
Figure 9 contains an expanded view of a chart from Figure 8.
Figure 10 contains another embodiment of a graphical display according to the instant disclosure.
Figure 11 contains an illustration of an operating logic suitable for use with an embodiment.

### DETAILED DESCRIPTION

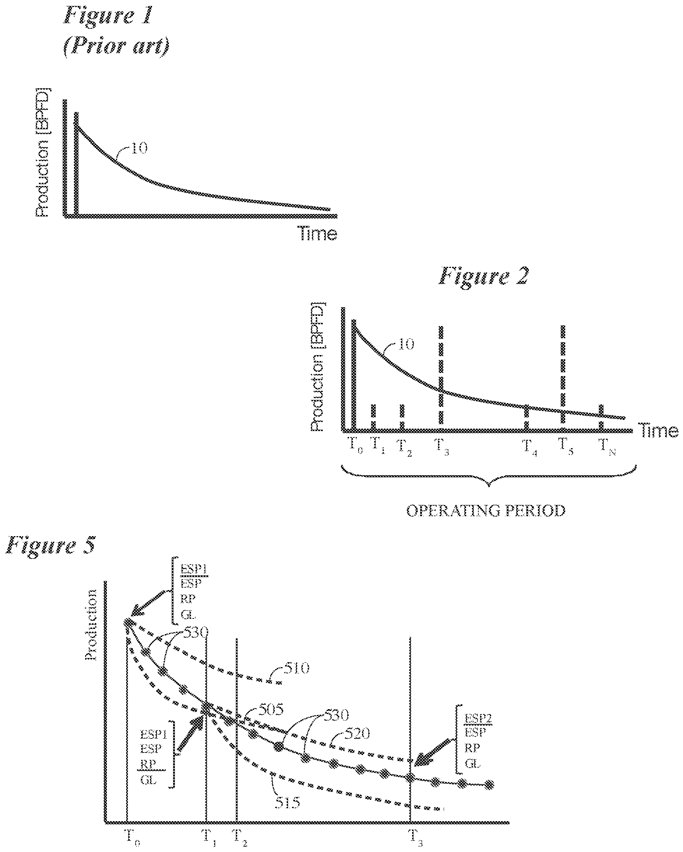

Turning first to Figure 1 which contains an example of a prior art well decline curve, it is well known in the reservoir engineering field to calculate a decline curve for a particular well. There are numerous acceptable methods of doing this including, for example, Arps algorithm, hyperbolic decline, exponential decline, harmonic decline, etc. Figure 1 contains a schematic representation of a decline curve which illustrates production rate versus time for a hypothetical well, where "BPFD" on the "Y" axis represents "barrels of fluid per day". As is generally indicated, traditionally such curves are estimated using parameters such as an initial production rate value at, say, time T₀, an initial decline rate, the degree of curvature of the curve, etc. In other instances, the decline curve might come from a reservoir model. Rules of thumb and heuristics can provide adjustments to the standard decline curve for a well. All of this is well known.

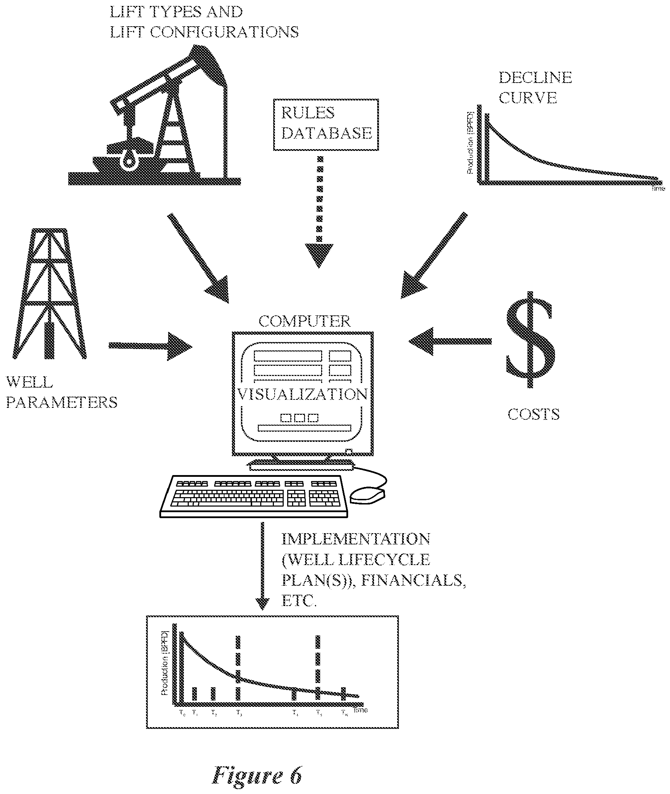

Figure 6 contains an example operating environment of a visualization system for use with a well lifecycle embodiment. Parameters pertaining to the selected well will be accessed as input. These parameters might include the well depth, temperature, hydrocarbon type, water cut, etc. Additionally, a decline curve that is representative of the production from selected well over some period of time will be accessed. A selection of lift types and lift type configurations will also be specified. Cost (potentially including both operating and change over cost) is used as an objective function suitable for this embodiment, where the operating / changeover cost is specified for each lift type configuration. Operating cost might include a projection of expected energy cost over the subject time period. Given the foregoing, this embodiment will utilize a computer to produce a well lifecycle or implementation plan by formulating the problem as a network with the distance between nodes being a function of cost and then solving for the minimum distance path through the network. Optionally, a rules database that contains heuristic guidelines will used to shape the results of the computation.

The present invention will provide visualization into, not just the optimal solution, but also alternatives that are in some way near optimal. The visualization will take place on a computer's attached graphical display or, more generally, on any display device suitable for presenting graphical and text information to a user. Display devices such as table computers, smart phones, smart terminals, etc., could also be used. In the event that the computational load of the visualization calculations is too much for the display device, the computations could be done remotely and communicated via a network (e.g., wired or wireless Ethernet, Bluetooth, WiFi, etc.) from the computational computer to the display device.

The user will be allowed to interactively manipulate the on-screen display (e.g., using a mouse, pointing device, light pen, keyboard, etc.) as described below. In some cases, the user will select with a mouse certain points on the graphical display corresponding to changeover points and adjust the timing on-screen, thereby possibly changing an optimal solution to a sub-optimal one if desired, where "sub-optimal" should be understood to mean a lifecycle plan that is a modified version of a pre-calculated plan that has been previously determined to minimize (or maximize) an objective function. The user's modification will potentially cause the value of the objective function for the modified plan to increase (or decrease if the objective function has been maximized). Simultaneously with the movement of the changeover point and in-real time any financial information or production data that is displayed will be recalculated to reflect the change in timing.

The sub-optimal solution will then be available to be taken into the field and implemented, thereby determining which lift and lift configuration to install and use (and at which point(s) to change it) over a predetermined time period. Note that one approach to calculating a well lifecycle plan may be found in the co-pending U.S. patent application "SYSTEM AND METHOD FOR WELL ARTIFICIAL LIFT LIFECYCLE PLANNING", U.S. Patent App. Ser. No. 15/612,937.

With respect to the computer of Figure 14, as a general matter when the term "computer" is used herein, that term should be broadly construed to include any active device including, without limitation, a processing unit, a field programmable gate array, discrete analog circuitry, digital circuitry, an application specific integrated circuit, a digital signal processor, a reduced instruction set computer, devices with multicore CPUs, etc. The foregoing also includes distributed or parallel processing systems where multiple computers contribute to a final solution. In brief, all is required is that the computer be minimally programmable in some sense and capable of accepting input of the sort described above. The computer can some amount of local internal memory (e.g., volatile and/ or non-volatile memory devices) and storage, and potentially have access to memory or storage that is connectable to it via a network. The computer may access a computer application program stored in non-volatile internal memory, or stored in an external memory that can be connected to the computer via an input/output (I/O) port. The computer program application may include code or executable instructions that when executed may instruct or cause the central controller and other components to perform steps or functions embodying methods disclosed herein.

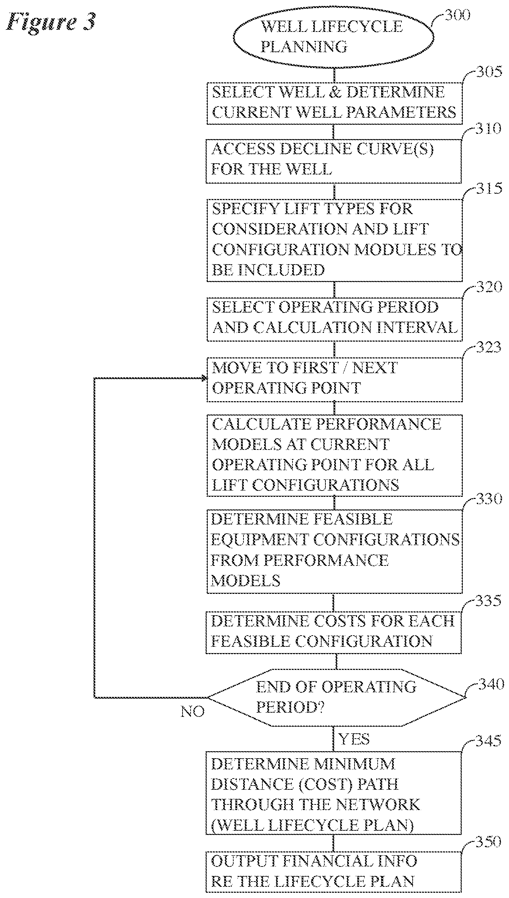

Figure 2 contains a simplified schematic representation of one embodiment of a well lifecycle plan produced according to the process of Figure 3. In that regard, note that when the term "lifecycle" is used, that term should be understood to mean an artificial lift configuration plan that specifies over a particular time period a lift installation / configuration / replacement strategy for a well. An example of a well lifecycle plan is discussed more fully in connection with Figure 2 below.

Returning to a discussion of Figure 2, In this particular example, the lift type and associated parameters related to that lift type are selected at each time point are the ones that minimize the operating cost over the period of time from T₀ to T_{N}. In this figure, the type of lift is scheduled to be changed at times T₃ and T₅. At times T₁ and T₂ the initially selected lift type is scheduled to be reconfigured with different operating parameters. At T₄, the parameters associated with the lift type installed at T₃ are reconfigured. Taken together, the changes at T₀ to T₅ are designed to produce the minimum or near minimum operating cost of producing hydrocarbons from the subject well over the lifecycle / operating period.

Note that for purposes of the instant disclosure, the term "lifecycle time series" will be use indicate the action times T₀ to T_{N} in Figure 2 and the event(s) associated with each point in time where an action is recommended to be taken. In some cases the time series will comprise only the entries T₀ to T_{N}, whereas in other cases every calculation point between T₀ and T_{N} will be assigned either an action or "no action" where no activity is recommended at intermediate times.

Turning next to Figure 3, this figure contains a flowchart **300** of a well lifecycle planning program. As an initial step **305,** a well will be selected and various parameters about it determined according to methods well known to those of ordinary skill in the art. These parameters could include, for example, its current and historical production rate, the equipment that is currently in place, the depth of the producing formation, the diameter of the well, the oil water contact level, the gas-oil ratio, the oil-water ratio, the pay thickness, the lithology of the producing formation, the composition of the produced fluid (e.g., does it contain corrosive components, sand, etc.), API gravity, bottom hole temperature and pressure, etc. Information related to such might be useful in the steps that follow.

A decline curve or curves is obtained or calculated for the selected well according to methods well known in the art (box **310**). Note that for purposes of this disclosure, a decline curve will be broadly interpreted to be a forecast of the relevant production parameters that would impact lift sizing. Thus, a decline curve might refer to an oil decline curve, a water decline curve, a gas decline curve, total fluid production, some combination of the foregoing, etc. In some embodiments that calculation will be done outside of the optimization program that is described below in connection with box **345**. There are many different ways to obtain this curve as discussed above, but the particular method by which it is obtained is not important to the operation of the current embodiment.

Candidate lift types and available lift configuration modules for each lift type will need to be identified **315.** Note that for the purposes of the instant disclosure a "lift configuration module" is defined by a lift technology, i.e., the set of components used, any specialized configuration for the technology, and the range of operating conditions covered by the technology. Table 1 below contains some exemplary lift types and some configurable hardware components associated with each. As an example and for the purposes of the instant embodiment, configuration of an electrical submersible pump (ESP) will involve sizing of a particular pump, motor, and cable length between the surface and the pump. Similarly, the performance of a PCP (progressing cavity pump) can be largely characterized by its pump, drivehead, and rods. Those of ordinary skill in the art will recognize that other lift types can be similarly characterized.

Continuing with the embodiment of Figure 3, an operating period and calculation interval **320** will be selected. One combination of these two parameters that has proven to be useful in some instances is five years of operation calculated at monthly time intervals. Those of ordinary skill in the art will recognize that the extent of the operating time period might be longer or shorter and the number of time intervals increased or decreased depending on the characteristics of the chosen well and other factors. Clearly, as the operating time period increases and/or the calculation time interval decreases, the optimization problem will require more computer resources to calculate.

Next in the embodiment of Figure 3, the first or next operating point will be selected **323,** with the "first" point typically being the current time and the next point being separated in time from the first by the calculation interval, e.g., by one month.

According to this example, the first (or next, if this is the second or subsequent time passing through this box **323**) will be identified and performance models will be calculated for each lift configuration (box **325**) at the identified operating point. That is, given the well parameters and lift type the associated components will be sized according to standard petroleum engineering techniques at the current time point on the decline curve. For example, in the case of rod lift, standard RPL-12 provides guidance with respect to how to size it for different production and well scenarios.

In box **330,** the universe of available equipment configurations of **325** will be examined to determine which are actually feasible for the given well at this time point as determined by the performance-model calculations. By eliminating those configurations that are not feasible at this point the size of the optimization that must be solved can potentially be substantially reduced. This step has proven to be useful in some instances to reduce the solution space that must be searched in order to find a minimum cost lifecycle plan. This might be done in many ways, but one preferred way is Bellman's one useful approach is generally illustrated by the curves in Figure 5.

In brief, in the current embodiment lift configurations that have a performance envelope that does not enclose the decline curve will be designated as "not feasible". In more particular, in Figure 5 at time T₀ four different artificial lift candidates have been identified: ESP1 (a first electrical submersible pump configuration), ESP (a second electrical submersible pump configuration), RP (a reciprocating piston configuration), and GL (a gas lift configuration). Of the four, ESP1 has been selected as an initial lift technology. The points in time at which well is to be evaluated for a possible change in the lift type are indicated by data points **530.**

In this figure, the points T₁ and T₃ have been identified using an approach disclosed below as times when the lift could be changed to minimize the cost of lifting the hydrocarbons to the surface for this well. In the example of Figure 5, at T₁ the recommendation is to change to the RP lift type. At T₃, the recommendation is to change to lift configuration ESP2.

Associated with ESP1 is the operating envelope for this particular lift configuration which is indicated by curves **505** and **510**. As can be noted in this figure, between times T₀ and T₂ the operating envelope for ESP1 encloses the projected decline curve for the well. However, at point T₂ the lower limit of the envelope crosses the decline curve **530.** Beyond that point ESP1 is not a feasible solution and does not need to be considered as an option for calculation points **530** that follow T₂. Thus, in this example it can be removed from the solution set for times after T₂. At point T₁ the recommendation is to change to lift type RP. The operating envelope for the selected RP configuration is shown as curves **515** and **520,** which surround the projected decline curve past point T₃ which is the next point at which the recommendation is to change the lift type. In fact, the RP configuration envelope is projected to be feasible beyond that T₃ but based on a cost analysis the recommendation is to change the lift type to another configuration of an ESP lift at this point, i.e., to ESP2 in this figure.

Returning now to the embodiment of Figure 3, once the feasible solutions have been identified and those which are not feasible have been eliminated, the remaining collection of solutions is conceptualized as a network of nodes, with each node corresponding to one of the feasible solutions. This information is then used to determine the costs for the remaining lift types and lift configurations (box **335**) at each node. In some cases, cost might include both the operating cost for the calculation interval and the cost of changing over to a different lift type or configuration. Note that, as explained below, the operating cost is just one of many possible objective functions that could be used in the calculation that follows. Preferably, this will include at least the cost of the power (e.g., electricity) required to operate the lift for a period of time corresponding to the calculation interval. Additionally, other costs such as the installation and equipment cost, the preventive maintenance costs, the (e.g., monthly) operating costs, the mean time between failure and workover costs, etc., might be obtained for each type of lift. Further, and if desired, the depreciation of the lift equipment might be included as an item. The power usage can be calculated from performance models of each lift type / configuration combination. The expected cost could also be compared with a projected revenue stream calculation for this well to yield an estimate of the income for the operating period if desired. For example, the projected hydrocarbon price and production from the well as predicted by the decline curve could be used to estimate the revenue for that period.

If the end of the operating period has not been reached (the "NO" branch of decision item **340**), the next operating point will be selected and the above process repeated. On the other hand, if the last operating point has been processed (the "YES" branch of decision item **340**), the network of nodes produced above together with the associated cost of each will be used as follows.

If the last time point has been reached, the loop **323** - **340** will exit and the nodes and associated costs will be used to calculate a minimum cost well lifecycle plan. The lifecycle plan can then be budgeted for and implemented **345** in the field. As an example, and referring again to the example, of Figure 2, the well operator should budget to reconfigure the existing lift configuration at time T₁ and T₂, replace the lift at time T₃, reconfigure the replacement lift at T4 and install another lift configuration at T₅. Note that in some instances financial information could be provided in connection with the assembled lifecycle plan (e.g., net present value of the expected cost or revenue time series, etc.).

If it is determined that the end of the designated time interval has been reached, the minimum cost path will be identified and presented to the user using an embodiment of the visualization system described below. The user will then be able to implement the plan by, for example, budgeting and planning for lift changes at predicted times in the future. Then when the designated time arrives, the lift can be changed according to the plan as originally calculated to subsequently modified. Subsequent modification might include, for example, instances where the decline curve in the future proves to be significantly different from the estimated decline curve when the calculation was done.

Additionally, certain financial information might be calculated and made available to a user to assist in deciding whether or not (or which) lifecycle plan to implement (step **355**). The sort of financial information that might be useful would include, for example, the net present value of the operating cost assuming a discount rate or discount rate function, the expected profit from implementing the plan assuming an estimate of the future oil or other hydrocarbon price, etc. Given a series of cost estimates and/or income estimates together with a discount rate, it is well known how to determine the net present value of a cash stream and such might be useful in determining which calculated lift plan to implement.

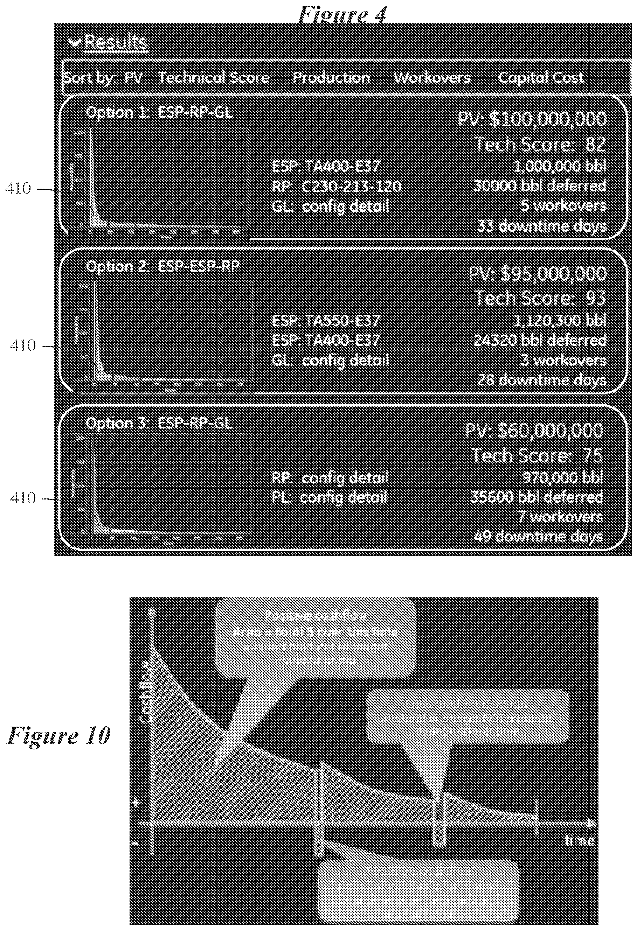

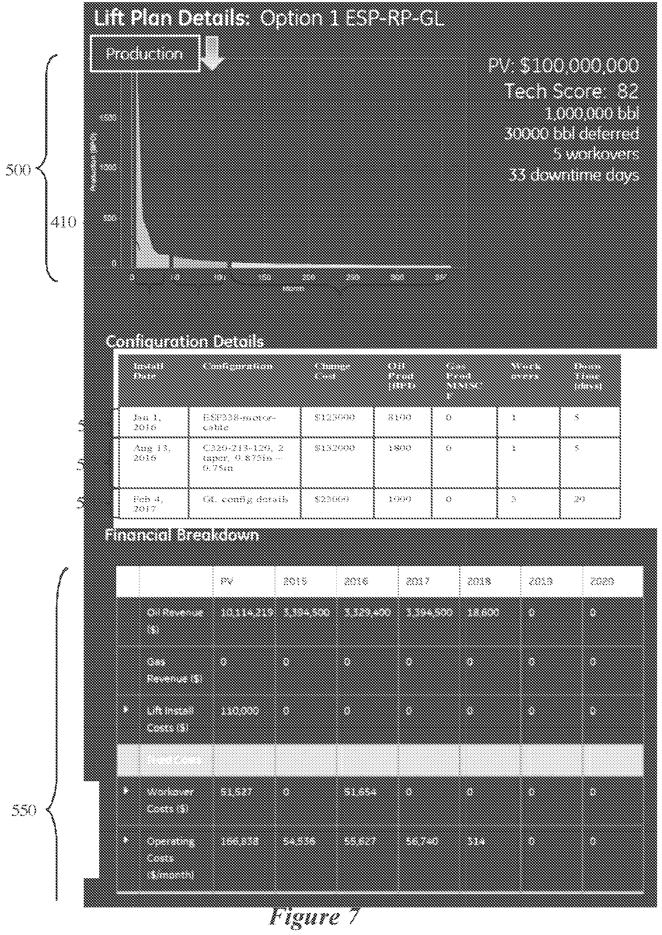

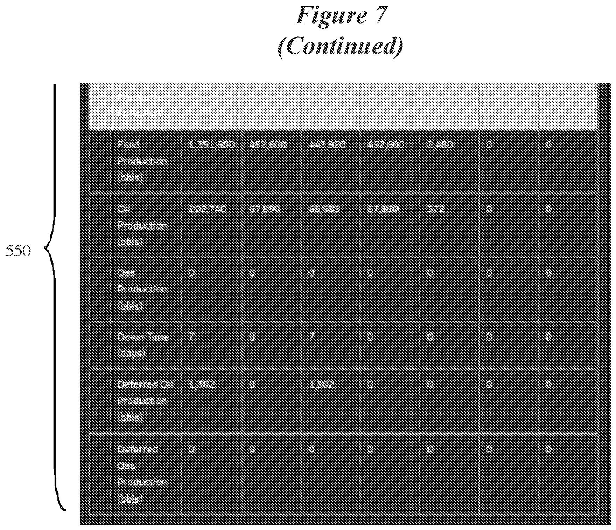

Turning next to Figure 4 which contains an embodiment of a first level of the instant visualization system, this sort of display is presented to a user at the conclusion of the calculation phase illustrated in Figure 3. In some embodiments, the optimization program will provide, in addition to the solution that minimizes (or maximizes) the objective function, a ranked list of other lifecycle solutions, where the sub-optimal solutions are ranked in terms of the value of the objective function. As can be seen, three different options have been presented to the user which are ranked in terms of their present value ("PV"). The first option is a lifecycle plan that has a projected present value of $100 million if implemented as calculated. Option 1 is the minimum cost solution obtained by the algorithm of Figure 3 offset against the projected income if this particular lift lifecycle is adopted. Two other options are also presented, Options 2 and 3 have lesser calculated present values ($95 million and $60 million, respectively) but there are other tradeoffs as discussed below. Also presented is a graph of projected production decline curve versus time for this well **410.** Note that this production decline curve could be based, in some embodiments, on the actual equipment configuration in the selected lifecycle option. This plot can be seen more clearly in Figure 7 which is discussed below.

Each option in Figure 4 has listed with it the particular lift combination (items **412, 413,** and **414)** that is associated with it. For example, lift combination 412 is "ESP-RP-GL" which indicates that the first lift type should be ESP, the second RP (rod lift), and the third GL (gas lift). With respect to option 2, the lift combination is ESP, followed by a differently configured ESP which is then followed by RP.

Additional information is given that a user might find useful in deciding between options. For example, each option lists how many barrels are expected to be produced according to that well lifecycle, the amount of deferred production ("bbl deferred") using that plan, how many workovers are predicted to be necessary, and how much down time over the prediction period. These are only some of the parameters that might be displayed to the user and, in some embodiments, the user will be able to choose which ones to display.

One reason for presenting the information in this way should now be clear. It allows a user to determine the tradeoffs he or she is willing to make. Although Option 1 has the greatest present value, Option 2 has the least downtime and Option 3 has the most deferred production. The user will be able to choose from Level 1 the option that makes the most sense to him or her and understand more fully the tradeoffs when the information is displayed in this way.

Additionally, a "Tech Score" is presented for each option. This is a quantitative value that assesses the risk level associated with implementing the particular lift plan. One way to create such a score is to implement a rules engine which embodies heuristic rules from industry experts that assesses the level of suitability for a particular lift type for particular well conditions. In one embodiment, the rules are of three types. The first type of rule is expressed as depth versus volume lookup tables for each lift type and sub-tables exist for each casing and tubing size. These tables were based on calculations performed using design software as well as typical rules of thumb from prior experience. The second category consists of "Disallow" rules expressed as "IF.... THEN... Disallow" which causes the lift type to be disallowed if even just one such rule is triggered (e.g., the lift is too big for the well). An example would be if a lift type physically cannot fit into the wellbore. In such a case, the evaluation of any other rules is irrelevant since the lift type simply cannot work. The third category consists of "Warning Rules" expressed as "IF... THEN... Add Penalty", for which satisfying the IF statement results in a penalty deducted from the lift type. Each warning rule might have a different penalty factor depending on the severity of it being violated as some rules of thumb are more severe than others. The penalties associated with multiple warning rules could be added together in determining the total penalty score for the given lift type and configuration. The penalties associated with multiple warning rules could be added together or otherwise combined (e.g., a weighted average, a total, a geometric average, the maximum of the penalties, etc., could be computed) in determining the overall penalty for the given lift type and configuration. In some cases, the penalty could be applied to cost information at each node to make its "distances" to the next node longer, thereby making it more disfavored in the final solution. This total lift plan penalty score can then be normalized to provide an assessment of technical risk that is comparable across lift plans. In the present example, the Tech Score is inverse to the risk (eg. low score equals high risk, and high score equals low risk) - but we should not be limited to this interpretation.

Turning now to example of Figure 7, the chart **500** in this figure shows the Level 2 analysis which is an expanded and enhanced view of Option 1 from Figure 4. The decline curve **410** can now be seen more clearly. The vertical axis is production in barrels per day, but of course, it could be production of any fluid (including gas) from the wall. The horizontal axis is "time" in years. Also more clearly visible is the fact that the curve is interrupted in two places. There are three sections **510, 515,** and **520** which correspond to lift options ESP, RP, and GL, respectively.

In still another embodiment, a recommended lift plan may be represented as a graph of value over time. An example of such an embodiment is shown in Figure 10. In this figure the vertical axis dimension is described differently than before and, indeed, could be cast in still other ways. In this example, the vertical axis is "cash flow" which might be based purely on revenue (e.g., calculated from the estimated volumes of oil and gas produced and the commodity prices of oil and gas) or it might include deductions for costs. This is just one example of the way that the decline curve might be recast and others include produced material, avoidance of downtime (risk), cost of water disposal, or any other "value" metric. It should be noted that negative value can be clearly expressed using this construct, and the example shown in Figure 10 includes two examples of negative cashflow during periods between the removal of a first lift pump and the installation of a second lift pump. This negative value may represent the capital cost of the newly installed equipment, the cost of performing the workover, the value of the oil and gas not produced during the downtime, or a combination of these costs.

Returning to Figure 7, below the chart are details associated with each of the lift configurations and the projected date when it is to be put into service. For example, the row corresponding to **510** indicates that during that time period in the chart **500** the ESP lift has the configuration "ESP338-motor-cable" which corresponds to a motor size and other parameters related to the lift. The other rows similarly contain details of the other lift configurations which are recommended in this option.

Finally with respect to Figure **7****,** section **550** contains a detailed financial breakdown for the selected lift type by year. This variation has many of the key elements of an income statement (oil revenue, gas revenue, install costs, workover costs, operating costs, power costs) provided in an annual (or other time element) breakdown, as well as the present value calculated, preferably using a user provided rate of return. Further down in the table, additional parameters such as liquid production, oil production, gas production, deferred production, downtime are also provided per time element (annual) and totaled over the life of the well for this well.

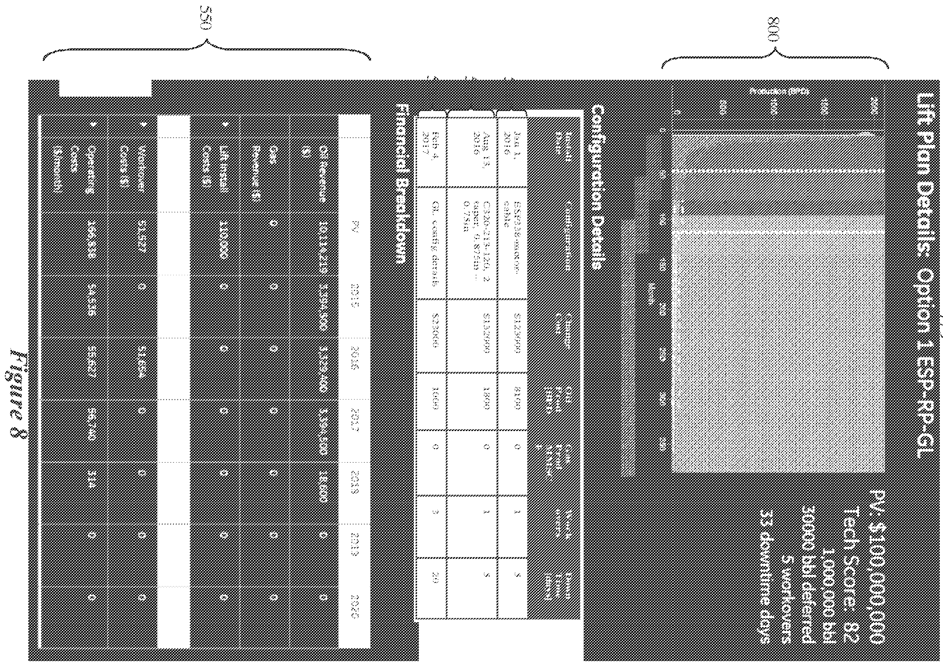

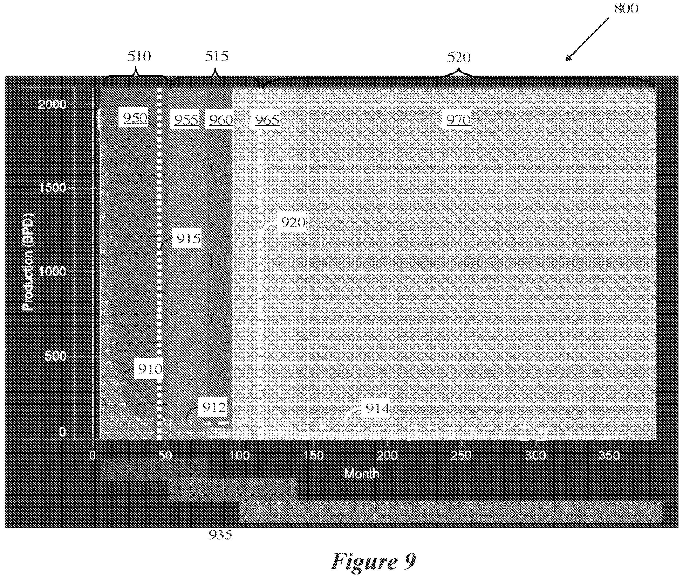

Turning next to Figure 8, this aspect of the instant visualization program represents the Level 3 analysis and contains an interactive chart 800 that is explored in greater detail in Figure 9. Note that the bottom portion of the table **550** is not reproduced here since it is identical to the table **550** of Figure 7 which is displayed in its entirety. Figure 9 contains a schematic representation of an interactive chart that is designed to assist a user in selecting a particular lift lifecycle plan for a well by exploring variations around the selected option.

As a first example, the range of operation (operating envelope) for each lift type can be shown using, for example, a dashed line **910** / **912** / **914** or a shaded area around the curve. This range of operation would typically be determined by use of the underlying technical analysis which performed engineering design calculations for this specific lift configuration for this specific well.

In some embodiments this will be semi-transparent regions overlaid (e.g., region **950/955,** region **955/960/965,** and region **965/970**) and/or separate bars **925, 930,** and **935** that have been printed under the graph or some other way. These limits in this case are based on the underlying engineering calculations for each lift type. Note, it is likely operating ranges will overlap at the changeover points which are the endpoints of regions **510, 515,** and **525.**

In some embodiments a sensitivity analysis will be provided as an option. Procedurally, the user will be allowed to click and drag the timeline bars from side to side to determine the impact of delaying or advancing the changeover point(s). The range over which user would be able to adjust the changeover points would typically be limited by the operating range of each lift type. Preferably, this, would also update the financials by the operating (up to the limits from Feature #1) and this dynamically updates the financials. This is driven by the underlying analytics that are calculating the financial implications of modifying the lift plan from the baseline.

By way of explanation, one possible way to do this given a fixed / selected well lifecycle with given changeover points is to modify the associated time series and recalculate the parameters of interest from it. That is, in this example each time point in the series has (at most) three possible configurations associated with it: ESP, RP, and GL. Of course, in this scenario the feasible time-range of each lift type is limited so, in actuality, there are fewer than three options available at some time points. Associated with each time point and lift type is information such as operating cost, production, etc., which is dependent on the lift and lift configuration. Thus, a time series can be constructed for each lift type / configuration, where the lift time series may not extend over the entire operating period.

As such, allowing the user to move the changeover point(s) means that the analytics can construct a new time series in real time in background by extracting the appropriate cost, production, etc., information from each lift time series and then calculating financials, etc., from the assembled information. In this way, the calculated optimum lift plan can be used to obtain real-time variations in the solution. Of course, this is just one way to do this and those of ordinary skill in the art will understand that there are many other ways this might be done.

In this embodiment a financial table is dynamically updated via calculations on the backend as the user relocates the selected changeover point.

In some embodiments, the sensitivity analysis will also allow the user to click and drag portions of the production decline curve up and down This allows the user to explore "over-producing" or "under-producing" relative to the baseline production decline curve since the lift types have a range of operability as shown in Figure 5, and the operator could choose to operate differently By moving a portion of the decline curve, the user can perform a sensitivity analysis to understand the financial impact of under- or over-producing. The range over which user would be able to adjust the production decline curve would typically be limited by the reservoir conditions as well as the operating range of each lift type.

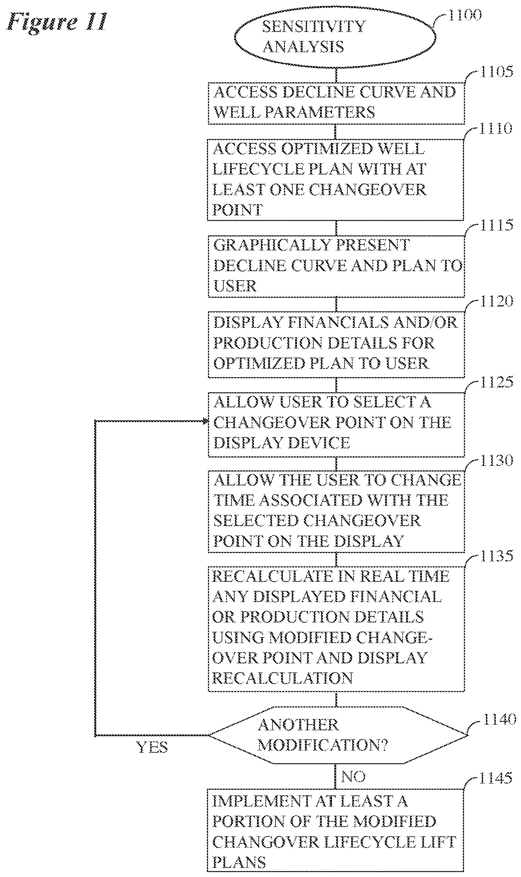

With respect to Figure 11, this figure contains a representation of a program logic that would be suitable for use with some embodiments and especially with the Level 3 approach. In some variations, the user will be able to perform a sensitivity analysis **1100** as follows. A decline curve and parameters for a subject well will be accessed **1105.** Additionally, an optimized well lift plan will be provided or calculated **1115,** as the case may be. The foregoing will then be displayed on a graphical device **1115** and, additionally, information such as financial and/or production details associated with the optimized plan will also be displayed on the graphic display device.

Next, the user will be allowed to select a changeover point on the display device 1125 which might be done with a mouse, keyboard, stylus, etc., according to techniques well known to those of ordinary skill in the art. The user will then be allowed to adjust the timing of the selected changeover, typically by moving it laterally and interactively on the display device. This change will result in a modified lift plan. Next, the calculation engine will use the optimized plan to recalculate and the displayed financial or production details (**1135**) for the modified plan in real time. The user will be given the option to move another changeover point or move the same point again (decision item **1140**). If there are no further modifications, the user will be able to implement at least a portion of one of the modified lifecycle lift plans (**1145**). By examining how the financial and/or production information is modified with changes to the changeover point(s), a sensitivity analysis can be obtained.

Note that, by performing sensitivity analysis, the user has tailored the option to their specific needs, but has likely also generated a new option that is not mathematically optimal. In that case, the user will be provided with the option to save financial, production, and timing data related to the modified well lifecycle plan.

## Claims

1. A computerized method of optimizing production in a hydrocarbon producing well, the method comprising the steps of:
a. accessing (1105) a decline curve for the well, said decline curve predicting hydrocarbon production from the well over a predetermined period of time;
b. accessing (1110) a lifecycle plan for the well, said lifecycle plan specifying a use of at least two different lift methods and containing at least one changeover point, the changeover points being points in time where one lift configuration is changed to another so as to optimize an objective function, each of said at least one changeover points occurring at a time within said predetermined period of time, the lifecycle plan comprising at least specific lift equipment configurations and appropriate changeover times from one lift equipment configuration to another so as to optimize an objective function, the lifecycle plan being obtained by:
selecting the well and determining its current parameters;
accessing the decline curve for the well; specifying lift types for consideration and configuration modules to be included, the configuration modules being defined by the set of components, specialised configurations and ranges of operating conditions for lift technologies;
selecting the operating period and calculation period;
iteratively going through operating points, calculating performance models at the current point for all lift configurations, determining feasible equipment configurations from performance models and associated costs;
at the end of the operating period, determining a minimum distance path through the network, the path being the lifecycle plan;
c. forming (1115) a graphical representation on a display device of said decline curve and said lifecycle plan, wherein each of said at least one change over points is represented by a graphical indicium on said display device;
d. displaying (1120) production information associated with said lifecycle plan;
e. allowing (1125) a user to select on said display device one of said graphical indicium associated with one of said at least one changeover points;
f. allowing (1130) a user to adjust on said display device a time location of said selected changeover point, thereby producing a modified lifecycle plan for the well, the modified plan being a modified version of a pre-calculated plan that has been previously determined to optimize the objective function, the modified plan potentially causing the value of the objective function to change;
g. using (1135) at least a portion of said modified lifecycle plan to calculate and display on said display device in real time a modified production information using the decline curve for the well; and,
h. making (1145) at least one lift decision in the well using said modified lifecycle plan.

2. The computerized method of managing production in a hydrocarbon producing well according to claim 1, wherein said production information includes at least one of a total fluid production, an oil production, a gas production, a down time, a quantitative risk, or a technical feasibility score.

3. The method of any preceding claim, further comprising presenting a quantitative value that assesses the risk level associated with implementing a particular lift plan for each modified lifecycle plan.

4. The method of claim 3, further comprising normalizing a total lift plan penalty score for each lift plan.

## Patentansprüche

1. Computergestützes Verfahren zum Optimieren der Produktion in einem Kohlenwasserstoff produzierenden Bohrloch, das Verfahren umfassend die Schritte:
a. Zugreifen (1105) auf eine Abnahmekurve für das Bohrloch, wobei die Abnahmekurve eine Kohlenwasserstoffproduktion aus dem Bohrloch über einen vorbestimmten Zeitraum vorhersagt;
b. Zugreifen (1110) auf einen Lebenszyklusplan für das Bohrloch, wobei der Lebenszyklusplan eine Verwendung von mindestens zwei unterschiedlichen Hebeverfahren spezifiziert und mindestens einen Umschaltpunkt enthält, wobei die Umschaltpunkte Zeitpunkte sind, an denen eine Hebekonfiguration zu einer anderen geändert wird, um eine Zielfunktion zu optimieren, wobei jeder der mindestens einen Umschaltpunkte zu einer Zeit innerhalb des vorbestimmten Zeitraums auftritt, der Lebenszyklusplan umfassend mindestens spezifische Hebeausrüstungskonfigurationen und geeignete Umschaltzeiten von einer Hebeausrüstungskonfiguration zu einer anderen, um eine Zielfunktion zu optimieren, wobei der Lebenszyklusplan erhalten wird durch:
Auswählen des Bohrlochs und Bestimmen seiner aktuellen Parameter;
Zugreifen auf die Abnahmekurve für das Bohrloch;
Spezifizieren der zu berücksichtigenden Hebearten und der einzuschließenden Konfigurationsmodule, wobei die Konfigurationsmodule durch einen Satz von Komponenten, spezialisierten Konfigurationen und Bereichen von Betriebsbedingungen für Hebetechnologien definiert sind;
Auswählen des Betriebszeitraums und des Berechnungszeitraums;
iteratives Durchlaufen von Betriebspunkten, Berechnen von Leistungsmodellen an dem aktuellen Punkt für alle Hebekonfigurationen, Bestimmen von durchführbaren Ausrüstungskonfigurationen aus Leistungsmodellen und den zugehörigen Kosten;
an dem Ende des Betriebszeitraums, Bestimmen eines minimalen Abstandswegs durch das Netzwerk, wobei der Weg der Lebenszyklusplan ist;
c. Ausbilden (1115) einer grafischen Darstellung auf einer Anzeigevorrichtung der Abnahmekurve und des Lebenszyklusplans, wobei jede der mindestens einen Umschaltpunkte durch ein grafisches Merkmal auf der Anzeigevorrichtung dargestellt wird;
d. Anzeigen (1120) von Herstellungsinformationen, die dem Lebenszyklusplan zugehörig sind;
e. einem Benutzer ermöglichen (1125), auf der Anzeigevorrichtung, eines der grafischen Merkmale, das einem der mindestens einen Umschaltpunkte zugehörig ist, auszuwählen;
f. einem Benutzer ermöglichen (1130), auf der Anzeigevorrichtung, eine Zeitposition des ausgewählten Umschaltpunkts anzupassen, wodurch ein modifizierter Lebenszyklusplan für das Bohrloch produziert wird, wobei der modifizierte Plan eine modifizierte Version eines vorberechneten Plans ist, der vorher bestimmt wurde, um die Zielfunktion zu optimieren, wobei der modifizierte Plan möglicherweise verursacht, dass sich der Wert der Zielfunktion ändert;
g. Verwenden (1135) mindestens eines Abschnitts des modifizierten Lebenszyklusplans, um auf der Anzeigevorrichtung in Echtzeit modifizierte Produktionsinformationen unter Verwendung der Abnahmekurve für das Bohrloch zu berechnen und anzuzeigen; und,
h. Treffen (1145) mindestens einer Hebeentscheidung in dem Bohrloch unter Verwendung des modifizierten Lebenszyklusplans.

2. Computergestütztes Verfahren zum Verwalten der Produktion in einem Kohlenwasserstoff produzierenden Bohrloch nach Anspruch 1, wobei die Produktionsinformationen mindestens eines von einer Gesamtfluidproduktion, einer Ölproduktion, einer Gasproduktion, einer Ausfallzeit, einem quantitativen Risiko, oder einer technischen Durchführbarkeitsbewertung einschließen.

3. Verfahren nach einem der vorstehenden Ansprüche, ferner umfassend ein Präsentieren eines quantitativen Werts, der das Risikoniveau, das einem Umsetzen eines bestimmten Hebeplans für jeden modifizierten Lebenszyklusplan zugehörig ist, bewertet.

4. Verfahren nach Anspruch 3, ferner umfassend das Normalisieren einer Gesamtstrafpunktzahl des Hebeplans für jeden Hebeplan.

## Revendications

1. Procédé informatique d'optimisation de la production dans un puits de production d'hydrocarbures, comprenant les étapes consistant à :
a. accéder (1105) à une courbe de déclin pour le puits, ladite courbe de déclin prédisant la production d'hydrocarbures à partir du puits sur une période de temps prédéterminée ;
b. accéder (1110) à un plan de cycle de vie pour le puits, ledit plan de cycle de vie spécifiant une utilisation d'au moins deux procédés d'élévation différents et contenant au moins un point de commutation, les points de commutation étant des points dans le temps où une configuration d'élévation est changée à une autre de manière à optimiser une fonction objective, chacun desdits au moins un point de changement se produisant à un moment dans ladite période de temps prédéterminée, le plan de cycle de vie comprenant au moins des configurations d'équipement d'élévation spécifique et des moments de commutation appropriés d'une configuration d'équipement d'élévation à une autre de manière à optimiser une fonction objective, le plan de cycle de vie étant obtenu par :
la sélection du puits et la détermination de ses paramètres de courant ;
l'accès à la courbe de déclin pour le puits ;
la spécification des types d'élévation pour la prise en compte et des modules de configuration à inclure, les modules de configuration étant définis par l'ensemble de composants, configurations spécialisées et plages de conditions de fonctionnement pour des technologies d'élévation ;
la sélection de la période de fonctionnement et de la période de calcul ;
le calcul itératif par les points de fonctionnement, le calcul de modèles de performance au point actuel pour toutes les configurations d'élévation, la détermination de configurations d'équipement possibles à partir de modèles de performances et de coûts associés ;
à la fin de la période de fonctionnement, la détermination d'un chemin de distance minimal à travers le réseau, le chemin étant le plan de cycle de vie,
c. la formation (1115) d'une représentation graphique sur un dispositif d'affichage de ladite courbe de déclin et dudit plan de cycle de vie, dans lequel chacun de ladite au moins une modification de points est représenté par un indice graphique sur ledit dispositif d'affichage ;
d. l'affichage (1120) d'informations de production associées audit plan de cycle de vie,
e. la permission (1125) à un utilisateur de sélectionner sur ledit dispositif d'affichage un dudit repère graphique associé à l'un desdits au moins un point de commutation ;
f. la permission (1130) à un utilisateur d'ajuster sur ledit dispositif d'affichage un emplacement temporel dudit point de commutation sélectionné, produisant ainsi un plan de cycle de vie modifié pour le puits, le plan modifié étant une version modifiée d'un plan pré-calculé qui a été précédemment déterminé pour optimiser la fonction objective, le plan modifié provoquant potentiellement la valeur de la fonction objective à changer ;
g. l'utilisation (1135) d'au moins une partie dudit plan de cycle de vie modifié pour calculer et afficher sur ledit dispositif d'affichage en temps réel une information de production modifiée en utilisant la courbe de déclin pour le puits ; et,
h. la réalisation (1145) d'au moins une décision d'élévation dans le puits à l'aide dudit plan de cycle de vie modifié.

2. Procédé informatique de gestion de production dans un puits de production d'hydrocarbures selon la revendication 1, dans lequel lesdites informations de production comportent au moins l'un parmi une production totale de fluide, une production d'huile, une production de gaz, un temps de descente, un risque quantitatif ou un score de faisabilité technique.

3. Procédé selon l'une quelconque revendication précédente, comprenant en outre la présentation d'une valeur quantitative qui évalue le niveau de risque associé à la mise en oeuvre d'un plan d'élévation particulier pour chaque plan de cycle de vie modifié.

4. Procédé selon la revendication 3, comprenant en outre la normalisation d'un score de pénalité de plan d'élévation total pour chaque plan d'élévation.
